# EUROPÄISCHE PATENTSCHRIFT

(11) **EP 3 067 254 B1**
(45) Veröffentlichungstag und Bekanntmachung des Hinweises auf die Patenterteilung: **02.05.2018**
(21) Anmeldenummer: 15158616.1
(22) Anmeldetag: 11.03.2015
(51) Int. Cl.: B62D 27/02, F16B 5/06, F16B 11/00

(54) **BEFESTIGUNGSELEMENT**
FASTENING ELEMENT
ÉLÉMENT DE FIXATION

(43) Veröffentlichungstag der Anmeldung: 14.09.2016
(73) Patentinhaber: Magna Steyr Fahrzeugtechnik AG & Co KG, 8041 Graz (AT)
(72) Erfinder: Hoermann, Reinhard, 8151 Hitzendorf (AT); Passegger, Wolfgang, 8430 Tillmitsch (AT)
(74) Vertreter: Zangger, Bernd

(56) Entgegenhaltungen:
- WO-A1-2013/191093
- US-A- 5 271 687

## Beschreibung

### Gebiet der Erfindung

Die vorliegende Erfindung betrifft ein Kraftfahrzeug, umfassend eine tragende Struktur die zumindest teilweise als Profil ausgebildet ist, ein Beplankungsteil und ein Befestigungselement, zur Befestigung des Beplankungsteils an der tragenden Struktur des Kraftfahrzeuges, wobei die tragende Struktur zumindest teilweise als Profil ausgebildet ist, und ein Verfahren zur Herstellung eines solchen Kraftfahrzeuges.

### Stand der Technik

Befestigungselemente zur Befestigung eines Beplankungsteils an einer tragenden Struktur eines Kraftfahrzeuges sind bekannt.

Aus der DE 10 2013 018 226 A1 ist ein Befestigungselement bekannt zur Befestigung einer Verkleidung an einem Kraftfahrzeug-Rohbauelement, mit einem Grundkörper mit einer Befestigungsseite, wobei an der Befestigungsseite mindestens ein Klipselement und ein erstes, das Klipselement umgreifendes, axiales Dichtelement vorgesehen sind.

Die DE 10 2005 031 395 A1 offenbart ein Verfahren zum Befestigen eines Anbauteils an einem Kunststoffbauteil, insbesondere einem Fahrzeugteil, bei welchem: in das Kunststoffbauteil mindestens eine Ausnehmung eingeformt wird; in der Ausnehmung ein Halteelement verrastet wird; und das Anbauteil an dem Halteelement befestigt wird.

Die US 5 271 687 A offenbart ein Kraftfahrzeug mit den Merkmalen des Oberbegriffs des Anspruchs 1.

Die WO 2013/191093 A1 bezieht sich auf ein plattenartiges Faserverstärktes Kunststoffelement, das mit einer Rahmenstruktur verbunden ist. Bei Kraftfahrzeugen die in der sogenannten Space-Frame Bauweise hergestellt sind, besteht die tragende Struktur im Wesentlichen aus Profilen.

Beplankungsteile stellen meist Außenhautbauteile des Kraftfahrzeuges dar und müssen an den Profilen der tragenden Struktur befestigt werden. Beplankungsteile werden in jüngerer Zeit oft aus Kunststoff hergestellt, meist im Spritzgussverfahren oder als Laminat-Teile. Solche Beplankungsteile werden üblicherweise durch Clip-Verbindungen, Verschraubungen oder Verklebungen direkt an der tragenden Struktur befestigt. Für die Herstellung von Kunststoffteilen ist auch das Verfahren des Thermoformens bekannt. Eine Herstellung mittels Thermoformen ist in der Regel einfacher und kostengünstiger als andere Verfahren. Jedoch weisen thermogeformte Kunststoffteile höhere Toleranzen auf und können daher durch die üblichen Montagetechniken nicht sicher an Profilen einer tragenden Struktur befestigt werden.

### Zusammenfassung der Erfindung

Es ist eine Aufgabe der Erfindung, ein Befestigungselement zur Befestigung eines Beplankungsteils an einer tragenden Struktur eines Kraftfahrzeuges anzugeben, wobei die tragende Struktur zumindest teilweise als Profil ausgebildet ist, das einen zuverlässigen Halt des Beplankungsteils am Profil auch bei größeren Bauteiltoleranzen ermöglicht.

Eine weitere Aufgabe der Erfindung ist es, ein entsprechendes Kraftfahrzeug anzugeben und ein Verfahren zur Herstellung eines Kraftfahrzeuges, sodass jeweils trotz Bauteiltoleranzen ein zuverlässiger Halt eines Beplankungsteils an einem Profil ermöglicht wird.

Die Lösung der Aufgabe erfolgt durch ein Kraftfahrzeug mit den Merkmalen des Anspruchs 1, und durch ein Verfahren mit den Merkmalen des Anspruchs 10. Erfindungsgemäß wird ein Befestigungselement als Zwischenstück zwischen dem tragenden Profil und dem zu befestigenden flächigen Beplankungsteil eingesetzt. Das Befestigungselement ist auf das Profil aufgesteckt und weist andererseits eine geeignete Fläche auf, die mit dem Beplankungsteil verklebt wird. Bevorzugt werden an der tragenden Struktur mehrere Befestigungselemente als Zwischenstücke eingesetzt um ein Beplankungsteil an der tragenden Struktur zu befestigen.

Die Klebefläche ist eine Fläche die dazu ausgebildet ist mit dem Beplankungsteil verklebt zu werden, und somit eine Fläche die eben oder der Kontur des Beplankungsteils entsprechend ausgebildet sein kann und selbst noch keinen Klebstoff aufweisen muss, da der Klebstoff in einen Klebespalt zwischen Klebefläche und Beplankungsteil eingebracht sein kann.

Die Nutzung einer Klebefläche bzw. eines Klebespalts zum Beplankungsteil hin erlaubt eine hohe Aufnahme von Bauteiltoleranzen, wobei durch den Aufsteckabschnitt ein zuverlässiger Halt am Profil gewährleistet bleibt.

Der Aufsteckabschnitt kann dazu als selbstarretierende Befestigung ausgebildet sein.

Das Beplankungsteil kann insbesondere ein thermogeformtes Kunststoffbauteil sein.

Das Profil kann Teil einer Tragstruktur eines Kraftfahrzeuges in Space Frame Bauweise sein.

Die Klebefläche ist eine ebene Fläche kann jedoch auch eine oder mehrere Biegungen in einer oder mehreren Richtungen aufweisen und beispielsweise eine konkave oder konvexe Form aufweisen.

Die Aufstecklaschen können im Bereich ihrer Enden Federelemente aufweisen, so dass die Aufstecklaschen durch Eingriff in am Profil ausgebildeten Nuten das Befestigungselement auf dem Profil in aufgesteckter Position fixieren können.

Die Aufstecklaschen können im Bereich ihrer Enden Hinterschnitte für das Profil ausbilden, so dass die Aufstecklaschen das Befestigungselement auf dem Profil in aufgesteckter Position fixieren können. Solche Hinterschneidungen können beispielsweise durch die genannten Federelemente gebildet werden oder auch durch eine Form, die das Profil hintergreift. Bevorzugt beträgt die Breite eines Befestigungselementes zwischen 0,5 cm und 10 cm, besonders bevorzugt zwischen 1 cm und 5 cm.

Das Befestigungselement wird vorzugsweise thermogeformt oder extrudiert oder in einem Spritzgussverfahren hergestellt. Das erfindungsgemäße Kraftfahrzeug umfasst eine tragende Struktur die zumindest teilweise als Profil ausgebildet ist und ein Beplankungsteil, wobei der Aufsteckabschnitt eines Befestigungselements auf das Profil aufgesteckt ist und das Beplankungsteil auf die Klebefläche des Verbindungsabschnitts des Befestigungselements geklebt ist.

Bevorzugt entspricht die Kontur der Klebefläche einer Kontur des Beplankungsteils, nämlich der Kontur des Beplankungsteils im Verbindungsbereich, so dass die Kontur des Beplankungsteils auf der Kontur der Klebefläche aufliegen kann.

Vorzugsweise ist zwischen der Klebefläche und der Kontur des Beplankungsteils ein Klebespalt mit Klebstoff gefüllt.

Bevorzugt sind entlang des Profils mehrere Befestigungselemente aufgesteckt und ist das Beplankungsteil auf die Verbindungsabschnitte der mehreren Befestigungelemente geklebt.

Das Profil ist rund und die Aufstecklaschen greifen mehr als die Hälfte des Profils um, um eine Hinterschneidung und einen sicheren Halt am Profil zu ermöglichen.

Insbesondere wenn das Profil rund ist oder sonst eine gebogene Außenseite aufweist, kann über die Breite des Befestigungselements an der Außenseite des Profils das Profil abgeflacht sein, um eine Verdrehsicherung zu erreichen und bevorzugt zusätzlich durch die Flanken der Abflachung eine axiales Verrutschen des Befestigungselements am Profil zu verhindern. Die Breite der Abflachung entspricht also bevorzugt der Breite des Befestigungselements, kann aber auch größer sein als die Breite des Befestigungselements. Das erfindungsgemäße Verfahren zur Herstellung eines Kraftfahrzeuges umfasst die Schritte, dass eine tragende Struktur des Kraftfahrzeuges bereitgestellt wird, wobei die tragende Struktur zumindest teilweise als Profil ausgebildet ist, insbesondere ein Space-Frame-Rahmen, wobei der Aufsteckabschnitt eines erfindungsgemäßen Befestigungselements auf das Profil aufgesteckt wird und danach ein Beplankungsteil auf die Klebefläche des Verbindungsabschnitts des Befestigungselements geklebt wird. Vorzugsweise wird der Aufsteckabschnitt des Befestigungselements durch Überdrücken auf das Profil aufgesteckt.

Bevorzugt werden die Aufsteckabschnitte mehrerer Befestigungselemente auf das Profil aufgesteckt und danach ein Beplankungsteil auf die Klebeflächen der Verbindungsabschnitte der Befestigungselemente geklebt.

### Kurzbeschreibung der Zeichnungen

Die Erfindung wird im Folgenden beispielhaft unter Bezugnahme auf die Fig. 5 bis Fig. 9 beschrieben.
- Fig. 1: ist eine dreidimensionale Ansicht eines nicht erfindungsgemäßen Befestigungselements an einer tragenden Struktur eines Kraftfahrzeuges die als Profil ausgebildet ist.
- Fig. 2: ist eine Darstellung gemäß Fig. 1, jedoch mit einem befestigten halbdurchsichtigen Beplankungsteil.
- Fig. 3: ist eine Darstellung gemäß Fig. 2, jedoch mit einem befestigten üblichen, also undurchsichtigen Beplankungsteil.
- Fig. 4: ist eine Darstellung eines Schnittes durch die Fig. 2.
- Fig. 5: ist eine dreidimensionale Ansicht einer zweiten Variante eines erfindungsgemäßen Befestigungselements an einer tragenden Struktur eines Kraftfahrzeuges die als Profil ausgebildet ist.
- Fig. 6: ist eine Darstellung gemäß Fig. 5, jedoch mit einem befestigten halbdurchsichtigen Beplankungsteil.
- Fig. 7: ist eine Darstellung eines Schnittes durch die Fig. 6.
- Fig. 8: ist eine Darstellung eines Profils dass zur Befestigung eines Befestigungselementes gemäß Fig. 5 vorbereitet ist.
- Fig. 9: ist ein Längsschnitt durch ein Profil mit aufgebrachtem Befestigungselement gemäß Fig. 5.

### Detaillierte Beschreibung der Erfindung

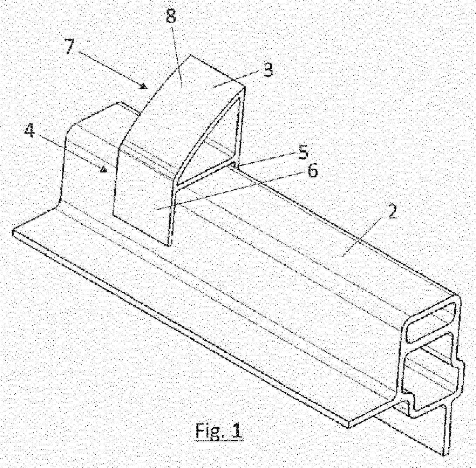

In Fig. 1 ist ein nicht erfindungsgemäßes Befestigungselement 3 an einer tragenden Struktur eines Kraftfahrzeuges, die als Profil 2 ausgebildet ist, dargestellt.

Das Profil 2 weist einen komplexen Querschnitt mit zwei durchgehenden Hohlräumen und abstehenden Laschen auf. Der Grundkörper des Profils 2 hat einen annähernd rechteckigen Querschnitt mit abgerundeten Kanten.

Ein Befestigungselement 3 weist einen Aufsteckabschnitt 4 auf, der aus zwei parallelen Aufstecklaschen 5 und 6 und einem die Aufstecklaschen 5, 6 verbindenden Querbalken besteht. Dieser Aufsteckabschnitt 4 kann das Profil 2 mittels der ersten Aufstecklasche 5 und der zweiten Aufstecklasche 6 zweiseitig umgreifen, sodass die Aufstecklaschen 5, 6 das Befestigungselement 3 auf dem Profil 2 in aufgesteckter Position fixieren können.

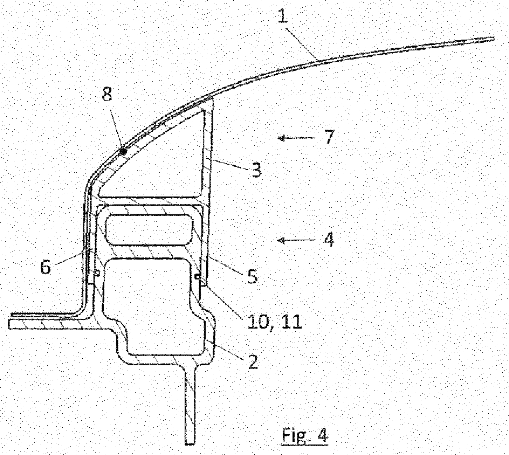

Wie im Schnitt durch das Befestigungselement in der Fig. 4 gut ersichtlich, weisen zur besseren Fixierung die Aufstecklaschen 5, 6 im Bereich ihrer Enden Federelemente 10 auf, so dass die Aufstecklaschen 5, 6 durch Eingriff in am Profil 2 ausgebildeten Nuten 11 das Befestigungselement 3 auf dem Profil 2 nach dem Nut-Feder-Prinzip fixieren.

Auf einer dem Profil 2 abgewandten Seite weist das Befestigungselement 3 einen Verbindungsabschnitt 7 auf, der eine ebene oder eindimensional gebogene Klebefläche 8 umfasst, zur Verklebung mit einem Beplankungsteil.

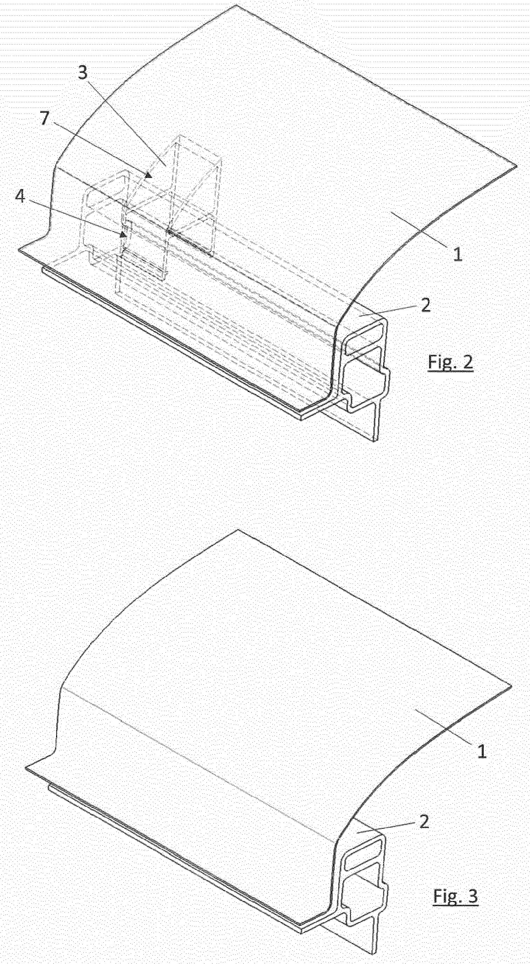

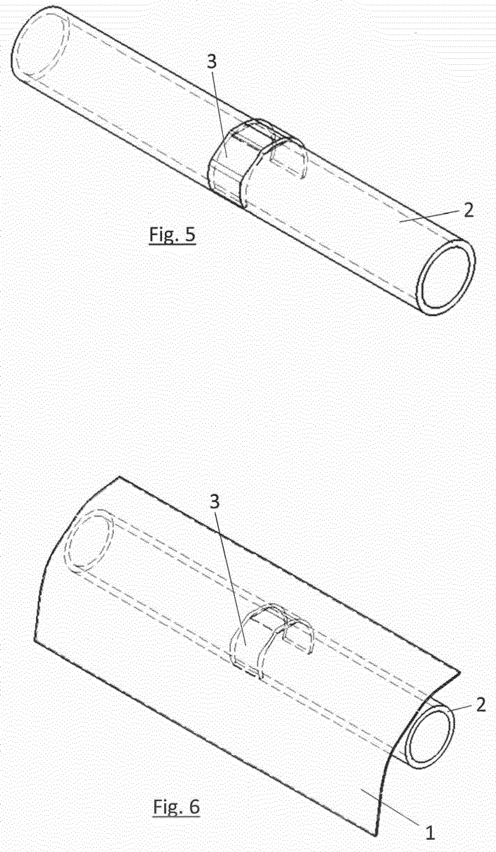

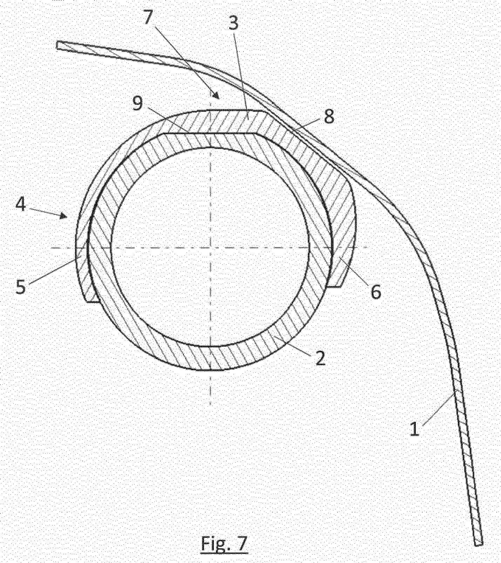

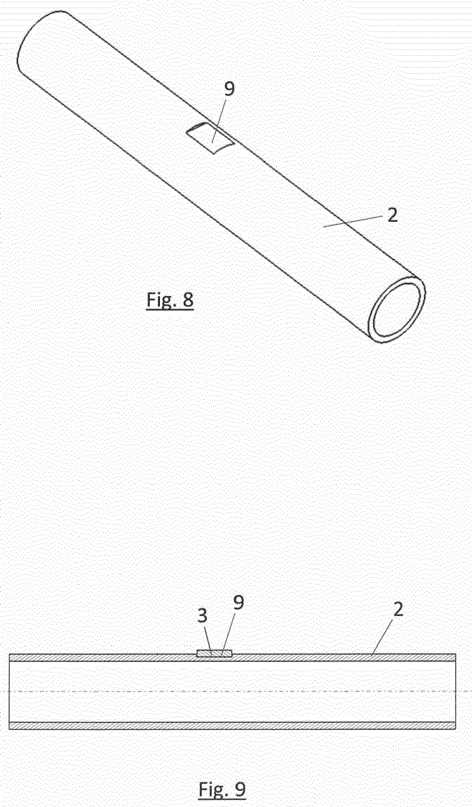

Die Anordnung der Fig. 1 ist mit einem halbdurchsichtig dargestellten aufgebrachten Beplankungsteil 1 in Fig. 2 dargestellt, so dass die normalerweise unsichtbaren Teile wie das erfindungsgemäße Befestigungselement 3 strichliert dargestellt sind. Wie in der Fig. 2 zu erkennen, ist die Breite des Befestigungselementes 3 wesentlich geringer als die Breite des Beplankungsteils 1, nämlich beispielsweise nur ca. 3 cm, so dass mehrere Befestigungselemente 3 genutzt werden können um ein Beplankungsteil 1 am Profil 2 zu befestigen. Ein erfindungsgemäßes Befestigungsteil 3 ist in den Fig. 5 bis Fig. 9 dargestellt.
Hier hat das Profil 2 eine Form mit rundem Querschnitt. Das aufgesteckte Befestigungselement 3 weist im Wesentlichen die Form eines Kreissegmentringes auf, wobei, wie in Fig. 7 gut ersichtlich, die Aufstecklaschen 5 und 6 des Befestigungselements so ausgebildet sind, dass das Befestigungselement 3 über mehr als die Hälfte des kreisförmigen Profils 2 reicht. Hierdurch wird eine Hinterschneidung zum Profil 2 erreicht, wodurch das Befestigungselement 3 durch Überdrücken auf das Profil 2 aufgesteckt werden kann und gut auf dem Profil 2 fixiert ist.
Zur weiteren Verbesserung der Fixierung des Befestigungselements 3 auf dem Profil 2, weist das Profil 2 über genau die Breite des Befestigungselements 3 an der Außenseite des Profils 2 eine Abflachung 9 auf, um eine Verdrehsicherung für das Befestigungselement 3 zu bilden, wie besonders in den Fig. 7 und 8 gut ersichtlich.
Die Klebefläche 8 des Befestigungselements 3 ist in diesem Fall in Umfangsrichtung versetzt zur Abflachung 9 ausgebildet, könnte jedoch auch an der selben Position in Bezug auf den Umfang des Profils 2 ausgebildet sein.

### Bezugszeichenliste

- 1: Beplankungsteils
- 2: Profil
- 3: Befestigungselement
- 4: Aufsteckabschnitt
- 5: erste Aufstecklasche
- 6: zweite Aufstecklasche
- 7: Verbindungsabschnitt
- 8: Klebefläche
- 9: Abflachung
- 10: Federelement
- 11: Nut

## Patentansprüche

1. Kraftfahrzeug, umfassend eine tragende Struktur die zumindest teilweise als Profil (2) ausgebildet ist, ein Beplankungsteil (1) und ein Befestigungselement (3), zur Befestigung des Beplankungsteils (1) an der tragenden Struktur des Kraftfahrzeuges, wobei die tragende Struktur zumindest teilweise als Profil (2) ausgebildet ist, wobei das Befestigungselement (3) einen Aufsteckabschnitt (4) umfasst, wobei der Aufsteckabschnitt dazu ausgebildet ist, das Profil (2) mittels einer ersten Aufstecklasche (5) und einer zweiten Aufstecklasche (6) zweiseitig zu umgreifen, wobei die Aufstecklaschen (5, 6) so ausgebildet sind, dass sie das Befestigungselement (3) auf dem Profil (2) in aufgesteckter Position fixieren können, wobei das Befestigungselement (3) auf einer dem Profil (2) abgewandten Seite einen Verbindungsabschnitt (7) aufweist, der eine Klebefläche (8) umfasst, wobei der Aufsteckabschnitt (4) des Befestigungselements (3) auf das Profil (2) aufgesteckt ist und das Beplankungsteil (1) auf die Klebefläche (8) des Verbindungsabschnitts (7) des Befestigungselements (3) geklebt ist, **dadurch gekennzeichnet, dass** das Profil (2) rund ist und die Aufstecklaschen (5, 6) mehr als die Hälfte des Profils (2) umgreifen, wobei das aufgesteckte Befestigungselement (3) im Wesentlichen die Form eines Kreissegmentringes aufweist, wobei die Klebefläche (8) eine ebene Fläche ist.

2. Kraftfahrzeug nach Anspruch 1,
**dadurch gekennzeichnet, dass** die Aufstecklaschen (5, 6) im Bereich ihrer Enden Federelemente (10) aufweisen, so dass die Aufstecklaschen (5, 6) durch Eingriff in am Profil (2) ausgebildeten Nuten (11) das Befestigungselement (3) auf dem Profil (2) in aufgesteckter Position fixieren können.

3. Kraftfahrzeug nach zumindest einem der vorhergehenden Ansprüche,
**dadurch gekennzeichnet, dass** die Aufstecklaschen (5, 6) im Bereich ihrer Enden Hinterschnitte für das Profil ausbilden, so dass die Aufstecklaschen (5, 6) das Befestigungselement (3) auf dem Profil (2) in aufgesteckter Position fixieren können.

4. Kraftfahrzeug nach zumindest einem der vorhergehenden Ansprüche,
**dadurch gekennzeichnet, dass** die Breite des Befestigungselementes (3) zwischen 0,5 cm und 10 cm beträgt.

5. Kraftfahrzeug nach zumindest einem der vorhergehenden Ansprüche,
**dadurch gekennzeichnet, dass** das Befestigungselement (3) thermogeformt oder extrudiert ist oder in einem Spritzgussverfahren hergestellt ist.

6. Kraftfahrzeug nach zumindest einem der vorhergehenden Ansprüche,
**dadurch gekennzeichnet, dass** die Kontur der Klebefläche (8) einer Kontur des Beplankungsteils (1) entspricht, so dass die Kontur des Beplankungsteils (1) auf der Kontur der Klebefläche (8) aufliegen kann.

7. Kraftfahrzeug nach zumindest einem der vorhergehenden Ansprüche,
**dadurch gekennzeichnet, dass** zwischen der Klebefläche (8) und einer Kontur des Beplankungsteils (1) ein Klebespalt mit Klebstoff gefüllt ist.

8. Kraftfahrzeug nach zumindest einem der vorhergehenden Ansprüche,
**dadurch gekennzeichnet, dass** entlang des Profils (2) mehrere Befestigungselemente (3) aufgesteckt sind und das Beplankungsteil (1) auf die Verbindungsabschnitte (7) der mehreren Befestigungselemente (3) geklebt ist.

9. Kraftfahrzeug nach zumindest einem der vorhergehenden Ansprüche,
**dadurch gekennzeichnet, dass** das Profil (2) über die Breite des Befestigungselements (3) an der Außenseite des Profils (2) eine Abflachung (9) aufweist.

10. Verfahren zur Herstellung eines Kraftfahrzeuges nach einem der vorhergehenden Ansprüche, umfassend die Schritte, dass eine tragende Struktur des Kraftfahrzeuges bereitgestellt wird, wobei die tragende Struktur zumindest teilweise als Profil (2) ausgebildet ist,
**dadurch gekennzeichnet, dass** der Aufsteckabschnitt (4) des Befestigungselements (3) auf das Profil (2) aufgesteckt wird und danach das Beplankungsteil (1) auf die Klebefläche (8) des Verbindungsabschnitts (7) des Befestigungselements (3) geklebt wird.

11. Verfahren nach Anspruch 10,
**dadurch gekennzeichnet, dass** der Aufsteckabschnitt (4) des Befestigungselements (3) durch Überdrücken auf das Profil (2) aufgesteckt wird.

12. Verfahren nach Anspruch 10 oder 11,
**dadurch gekennzeichnet, dass** die Aufsteckabschnitte (4) mehrerer Befestigungselemente (3) auf das Profil (2) aufgesteckt werden und danach ein Beplankungsteil (1) auf die Klebeflächen (8) der Verbindungsabschnitte (7) der Befestigungselemente (3) geklebt wird.

## Claims

1. Motor vehicle, comprising a supporting structure, which is at least partially designed as a profile (2), a panelling part (1) and a fastening element (3) for fastening the panelling part (1) to the supporting structure of the motor vehicle, wherein the supporting structure is at least partially designed as a profile (2), wherein the fastening element (3) comprises a plug-on portion (4), wherein the plug-on portion is designed to engage around the profile (2) on two sides by means of a first plug-on tab (5) and a second plug-on tab (6), wherein the plug-on tabs (5, 6) are designed in such a manner that they can fix the fastening element (3) on the profile (2) in the plugged-on position, wherein the fastening element (3), on a side facing away from the profile (2), has a connecting portion (7) which comprises an adhesive surface (8), wherein the plug-on portion (4) of the fastening element (3) is plugged onto the profile (2) and the panelling part (1) is adhesively bonded onto the adhesive surface (8) of the connecting portion (7) of the fastening element (3), **characterized in that** the profile (2) is round, and the plug-on tabs (5, 6) engage around more than half of the profile (2), wherein the plugged-on fastening element (3) substantially has the shape of a circular segment ring, wherein the adhesive surface (8) is a flat surface.

2. Motor vehicle according to Claim 1, **characterized in that** the plug-on tabs (5, 6) have spring elements (10) in the region of their ends, and therefore the plug-on tabs (5, 6) can fix the fastening element (3) on the profile (2) in the plugged-on position by engagement in grooves (11) formed on the profile (2).

3. Motor vehicle according to at least either of the preceding claims, **characterized in that** the plug-on tabs (5, 6) form undercuts for the profile in the region of their ends, and therefore the plug-on tabs (5, 6) can fix the fastening element (3) on the profile (2) in the plugged-on position.

4. Motor vehicle according to at least one of the preceding claims, **characterized in that** the width of the fastening element (3) is between 0.5 cm and 10 cm.

5. Motor vehicle according to at least one of the preceding claims, **characterized in that** the fastening element (3) is thermoformed or extruded or is produced in an injection-moulding process.

6. Motor vehicle according to at least one of the preceding claims, **characterized in that** the contour of the adhesive surface (8) corresponds to a contour of the panelling part (1), and therefore the contour of the panelling part (1) can rest on the contour of the adhesive surface (8).

7. Motor vehicle according to at least one of the preceding claims, **characterized in that** an adhesive gap between the adhesive surface (8) and a contour of the panelling part (1) is filled with adhesive.

8. Motor vehicle according to at least one of the preceding claims, **characterized in that** a plurality of fastening elements (3) are plugged on along the profile (2), and the panelling part (1) is adhesively bonded onto the connecting portions (7) of the plurality of fastening elements (3).

9. Motor vehicle according to at least one of the preceding claims, **characterized in that** the profile (2) has a flattened portion (9) over the width of the fastening element (3) on the outer side of the profile (2).

10. Method for producing a motor vehicle according to one of the preceding claims, comprising the steps of providing a supporting structure of the motor vehicle, wherein the supporting structure is at least partially designed as a profile (2), **characterized in that** the plug-on portion (4) of the fastening element (3) is plugged onto the profile (2) and then the panelling part (1) is adhesively bonded onto the adhesive surface (8) of the connecting portion (7) of the fastening element (3).

11. Method according to Claim 10, **characterized in that** the plug-on portion (4) of the fastening element (3) is plugged on by being pressed over the profile (2).

12. Method according to Claims 10 or 11, **characterized in that** the plug-on portions (4) of a plurality of fastening elements (3) are plugged onto the profile (2) and then a panelling part (1) is adhesively bonded onto the adhesive surfaces (8) of the connecting portions (7) of the fastening elements (3).

## Revendications

1. Véhicule automobile, comprenant une structure porteuse qui est réalisée au moins en partie sous forme de profilé (2), une partie de panneau (1) et un élément de fixation (3) pour la fixation de la partie de panneau (1) à la structure porteuse du véhicule automobile, la structure porteuse étant réalisée au moins en partie sous forme de profilé (2), l'élément de fixation (3) comprenant une portion d'enfichage (4), la portion d'enfichage étant réalisée de manière à venir en prise autour de profilé (2), des deux côtés, au moyen d'une première patte d'enfichage (5) et d'une deuxième patte d'enfichage (6), les pattes d'enfichage (5, 6) étant réalisées de telle sorte qu'elles puissent fixer l'élément de fixation (3) sur le profilé (2) dans une position enfichée, l'élément de fixation (3) présentant, sur un côté opposé au profilé (2), une portion de connexion (7) qui comprend une surface de collage (8), la portion d'enfichage (4) de l'élément de fixation (3) étant enfichée sur le profilé (2) et la partie de panneau (1) étant collée sur la surface de collage (8) de la portion de connexion (7) de l'élément de fixation (3), **caractérisé en ce que** le profilé (2) est rond et les pattes d'enfichage (5, 6) viennent en prise autour de plus de la moitié du profilé (2), l'élément de fixation (3) enfiché présentant essentiellement la forme d'une bague segmentée circulaire, la surface de collage (8) étant une surface plane.

2. Véhicule automobile selon la revendication 1, **caractérisé en ce que** les pattes d'enfichage (5, 6) présentent des éléments de ressort (10) dans la région de leurs extrémités, de telle sorte que les pattes d'enfichage (5, 6), par engagement dans des rainures (11) réalisées sur le profilé (2), puissent fixer l'élément de fixation (3) sur le profilé (2) dans une position enfichée.

3. Véhicule automobile selon au moins l'une quelconque des revendications précédentes, **caractérisé en ce que** les pattes d'enfichage (5, 6) constituent, dans la région de leurs extrémités, des contre-dépouilles pour le profilé de telle sorte que les pattes d'enfichage (5, 6) puissent fixer l'élément de fixation (3) sur le profilé (2) dans la position enfichée.

4. Véhicule automobile selon au moins l'une quelconque des revendications précédentes, **caractérisé en ce que** la largeur de l'élément de fixation (3) est comprise entre 0,5 cm et 10 cm.

5. Véhicule automobile selon au moins l'une quelconque des revendications précédentes, **caractérisé en ce que** l'élément de fixation (3) est thermoformé ou extrudé ou est fabriqué dans un procédé de moulage par injection.

6. Véhicule automobile selon au moins l'une quelconque des revendications précédentes, **caractérisé en ce que** le contour de la surface de collage (8) correspond à un contour de la partie de panneau (1) de telle sorte que le contour de la partie de panneau (1) puisse reposer sur le contour de la surface de collage (8).

7. Véhicule automobile selon au moins l'une quelconque des revendications précédentes, **caractérisé en ce qu'**entre la surface de collage (8) et un contour de la partie de panneau (1), un espace de colle est rempli de colle.

8. Véhicule automobile selon au moins l'une quelconque des revendications précédentes, **caractérisé en ce que** le long du profilé (2) sont enfichés plusieurs éléments de fixation (3) et la partie de panneau (1) est collée sur les portions de connexion (7) de la pluralité d'éléments de fixation (3).

9. Véhicule automobile selon au moins l'une quelconque des revendications précédentes, **caractérisé en ce que** le profilé (2) présente une partie aplatie (9) sur la largeur de l'élément de fixation (3) au niveau du côté extérieur du profilé (2).

10. Procédé de fabrication d'un véhicule automobile selon l'une quelconque des revendications précédentes, comprenant les étapes consistant à fournir une structure porteuse du véhicule automobile, la structure porteuse étant réalisée au moins en partie sous forme de profilé (2), **caractérisé en ce que** la portion d'enfichage (4) de l'élément de fixation (3) est enfichée sur le profilé (2) puis la partie de panneau (1) est collée sur la surface de collage (8) de la portion de connexion (7) de l'élément de fixation (3).

11. Procédé selon la revendication 10, **caractérisé en ce que** la portion d'enfichage (4) de l'élément de fixation (3) est enfichée en la pressant pardessus le profilé (2).

12. Procédé selon la revendication 10 ou 11, **caractérisé en ce que** les portions d'enfichage (4) de plusieurs éléments de fixation (3) sont enfichées sur le profilé (2) puis une partie de panneau (1) est collée sur les surfaces de collage (8) des portions de connexion (7) des éléments de fixation (3).
